# EUROPEAN PATENT APPLICATION

(11) **EP 4 752 025 A1**
(43) Date of publication of application: **03.06.2026**
(21) Application number: 24216829.2
(22) Date of filing: 02.12.2024
(51) Int. Cl.: B60W 60/00

(54) **VEHICLE TRAJECTORY PLANNING METHOD AND SYSTEM**

(71) Applicant: Zenseact AB, 417 56 Gothenburg (SE)
(72) Inventor: HARDÅ, Peter, 423 49 Torslanda (SE); FJELLSTRÖM, Johan, 417 29 Göteborg (SE); SANDBLOM, Fredrik, 431 66 Mölndal (SE)
(74) Representative: Zacco Sweden AB

(57) **Abstract**

The invention relates to a computer-implemented method (5100) for providing trajectories for execution by a vehicle, the computer-implemented method comprising: obtaining (S101) a free-space area in a surrounding environment of the vehicle that is formed based on sensor data output from one or more vehicle-mounted sensors, wherein the obtained free-space area is defined by an edge having one or more edge property classes that are defined by corresponding object classes of objects that define segments of the edge of the obtained free-space area; updating (S102) the obtained free-space area by modifying a size of the obtained free-space area based on the one or more edge property classes; and determining or approving (S109) a vehicle speed for a candidate path within the updated free-space area to be executed by the vehicle, wherein the vehicle speed is determined in dependence of the determined modification of the size of obtained free-space area.

## Description

### TECHNICAL FIELD

The disclosed technology relates to methods and systems for planning trajectories to be executed by a vehicle. In particular, but not exclusively the disclosed technology relates to automated driving systems and trajectory planning solutions using free-space area estimations.

### BACKGROUND

During the last decade, the research and development activities related to autonomous vehicles have exploded in number, and many different approaches are being explored. An increasing portion of modern vehicles have advanced driver-assistance systems (ADAS) to increase vehicle safety and more generally road safety. Automated driving systems (may also be referred to as Driving Automation Systems) represent a suite of technologies designed to assist the driver of a vehicle or to autonomously operate the vehicle without direct human intervention. These systems use an array of sensors, such as cameras, radar, lidar, ultrasonic sensors, and GNSS, to gather real-time data about the environment. This sensor data is then processed to enable various core functions of automated driving systems, such as perception, localization, and planning, which collectively ensure safe and efficient vehicle operation. The terms advanced driver-assistance system (ADAS) and autonomous driving (AD) will herein be referred to under the common term Driving Automation System (DAS) corresponding to all of the different levels of driving automation as for example defined by the SAE J3016 levels (1 - 5) of driving automation, and in particular for level 3, 4 and 5.

An important component in enabling safe and reliable navigation in automated driving systems is free-space estimation, which refers to estimations of areas in the surrounding environment of the vehicle that are free of obstacles and hence can be driven on or accessed by the vehicle. Accurate free-space estimation allows the vehicle to understand its surroundings, detect obstacles, and determine paths where it can travel with a low collision risk. Another important component for automated driving systems is trajectory planning, which involves generating a safe, efficient, and smooth trajectory through the identified free-space.

### SUMMARY

The herein disclosed technology seeks to mitigate, alleviate or eliminate one or more of the above-identified deficiencies and disadvantages in the prior art to address various problems relating to safely navigating a vehicle with a driving automation system in an environment.

Various aspects and embodiments of the disclosed technology are defined below and in the accompanying independent and dependent claims.

A first aspect of the disclosed technology comprises a computer-implemented method for providing trajectories for execution by a vehicle. The computer-implemented method comprises obtaining a free-space area in a surrounding environment of the vehicle that is formed based on sensor data output from one or more vehicle-mounted sensors. The obtained free-space area is defined by an edge having one or more edge property classes that are defined by corresponding object classes of objects that define segments of the edge of the obtained free-space area. The computer-implemented method further comprises updating the obtained free-space area by modifying a size of the obtained free-space area based on the one or more edge property classes, and determining or approving a vehicle speed for a candidate path within the updated free-space area to be executed by the vehicle. The vehicle speed is determined in dependence of the determined modification of the size of obtained free-space area.

A second aspect of the disclosed technology comprises a computer program product comprising instructions which, when the program is executed by a computer, causes the computer to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computer, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for providing trajectories for execution by a vehicle. The system comprises control circuitry configured to obtain a free-space area in the surrounding environment of the vehicle that is formed based on sensor data output from one or more vehicle-mounted sensors. The obtained free-space area is defined by an edge having one or more edge property classes that are defined by corresponding object classes of objects that define segments of the edge of the obtained free-space area. Further, the control circuitry is configured to update the obtained free-space area by modifying a size of the obtained free-space area based on the one or more edge property classes, and determine or approve a vehicle speed for a candidate path within the updated free-space area to be executed by the vehicle. The vehicle speed is determined in dependence of the determined modification of the size of obtained free-space area. With this aspect of the disclosed technology, similar advantages and preferred features are present as in the other aspects.

A fifth aspect of the disclosed technology comprises a vehicle comprising a system according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the free-space area estimation is rendered more dynamic and can mitigate risks associated with unexpected dangerous situations and thereby improve general road safety.

An advantage of some embodiments is that the free-space area estimation can account for unseen or undetected, but still relevant, objects that are likely to appear and pre-emptively mitigate collision risk and thereby improve general road safety.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for providing trajectories for execution by a vehicle, in accordance with some embodiments.
Fig. 2 is a schematic top-view illustration of a free-space area for a vehicle, in accordance with some embodiments.
Fig. 3a is a schematic top-view illustration of a modification of the free-space area illustrated in Fig. 2, in accordance with some embodiments.
Fig. 3b is a schematic top-view illustration of an adjustment of the modified free-space area illustrated in Fig. 3a, in accordance with some embodiments.
Fig. 4a is a schematic top-view illustration of a modification of the free-space area illustrated in Fig. 2, in accordance with some embodiments.
Fig. 4b is a schematic top-view illustration of an adjustment of the modified free-space area illustrated in Fig. 4a, in accordance with some embodiments.
Fig. 5 is a schematic top-view illustration of the combined free-space areas from Fig. 3b and Fig. 4b, in accordance with some embodiments.
Fig. 6 is a schematic illustration of a vehicle comprising a system for providing trajectories for execution by the vehicle, in accordance with some embodiments

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

As mentioned, accurate free-space estimation allows the vehicle, or more specifically the DAS, to understand its surroundings and determine paths where it can travel with a low collision risk. In other words, to free-space estimations are used to inform where the vehicle cannot travel. Another important component for driving automation systems is trajectory planning, which involves generating a safe, efficient, and smooth trajectory through the identified free-space.

However, merely estimating the free-space based on detected objects within the surrounding environment of the vehicle may not be sufficient for arguing that the DAS is operating safely, not only in relation to the vehicle's occupants but also in relation to other road users.

To this end, the present inventors propose a free-space estimation solution that is capable of accounting for the dynamic properties of the environment and to incorporate this into the free-space estimation by allowing the defined free-space to shrink and expand based on sensory data and assumptions about modelled behaviours of various objects or obstacles. Moreover, the proposed solution allows for the DAS to account for objects that are undetected but may yet appear with some probability.

In more detail, the free-space area is defined by an edge with one or more edge property classes. These edge property classes are in turn defined by the corresponding object classes of those objects that define or delimit the free-space area. For example, if a free-space area is limited in one direction by a parked vehicle, then that segment of the edge of the free-space area is assigned an edge property class based on the corresponding object class, namely "parked vehicle". Thus, the edge of a free-space area will be assigned various property classes based on the objects that limit the free-space area. For example, the edge property classes may be barrier, parked vehicle, moving vehicle, pedestrian, curb, ditch, and so forth. Moreover, a segment of the edge of the free-space area may assigned an edge property class further based on a state of the corresponding object class. For example, a "parked vehicle" that is parked in parallel with the road may be assigned a different edge property class as compared a "parked vehicle" that is parked with it's rear facing the road (i.e., parked at a perpendicular angle relative to the heading of the road). In some embodiments, a segment of the edge of the free-space area may be assigned an "unclassified" edge property class if the object class that is limiting free-space area is unknown or if the limitation is due to a limit in the sensory range.

Once the edge of the free-space area has been assigned one or more edge property classes, these edge property classes are used to update the free-space area by shrinking and/or expanding the size of the free-space area. This may for example be done by having some predefined assumptions or models related to a set of predefined object classes that are evaluated in view of the various edge property classes with regards to potential risks associated thereto. For example, if one considers an object class of "pedestrians" and if the edge property class for a segment of the edge of the free-space area would be "curb" (i.e., divider between the road and a sidewalk/pavement), then a behaviour model for the object class "pedestrian" may indicate that there is a risk that a pedestrian may enter the free-space area unexpectedly with some probability or likelihood at any point along that segment of the edge. Thus, the free-space area is accordingly shrunken along that segment of the edge in view of this risk. Analogously, if the edge property class would be "barrier" then the behaviour model of the object class "pedestrian" may indicate that there is a risk that a pedestrian may enter the free-space area unexpectedly with some probability or likelihood at any point along that segment of the edge. However, here it can be assumed that the likelihood of a pedestrian entering the free-space area at an edge property class defined as "barrier" is significantly lower than at an edge property class defined as "curb". This is then reflected in the amount of "shrinkage" applied at each segment, where a higher risk results in more shrinkage.

These modelled behaviours for the various object classes may be derived from statistical models, such as likelihood functions and distributions describing the probability that a specific object class enters the free-space area conditioned on the presence and absence of specific edge property classes of the free-space area. Moreover, the modelled behaviours may also incorporate an expected speed that the specific object class has when entering the free-space area, or make use of a statistical distribution of such speeds.

The statistical models may for example be defined based on collected sensor data from a fleet of vehicle equipped with appropriate sensory system, and/or based on studies performed in available literature with regards to behaviours of different object classes in traffic, which may then be confirmed by fleet data. For example, for a specific edge property class, the modelled behaviour for the object class "pedestrian" may be that a pedestrian will cross that segment of the edge with a probability of 2% and, if so, enter the free-space area with a speed of 1 m/s. Then, the free-space area is shrunken at that segment of the edge associated with that edge property class by a set amount in view of this modelled behaviour. In more detail, the free-space area may be shrunken by moving that segment of the edge by 0,5 m inwards as that would give the vehicle's safety systems (e.g., collision avoidance system) enough time to mitigate a potential collision based on the specification of the vehicle's safety systems. Accordingly, the herein proposed solution for free-space area estimations and trajectory planning may be understood as one system out of many systems of the DAS that together decrease the risk of collision.

It is noted that the values (2% and 1 m/s) in the aforementioned example are merely examples of possible values to facilitate the understanding of the embodiments disclosed herein as readily understood by the skilled reader. In a simple realization, one may also consider assigning the probability of any object entering a free-space area via a segment of the edge as 100% or 0% (depending on the associated edge property class).

In other words, it is herein proposed to treat the free-space area as an area that, with a sufficiently high probability or likelihood, is free from objects of one or more object classes, both at the current moment in time ("right now") as well as for some seconds ahead (in the "future"). The conclusion that the area is free from obstacles in the "future" is based upon the process of updating the size of the free-space area as presented herein.

Examples of the process for updating the free-space area by shrinking and/or expanding will be further elaborated upon in reference to the accompanying drawings.

Further, once the free-space area has been updated by shrinkage and/or expansion, a vehicle speed for a candidate path within the updated free-space area is determined. In other words, a candidate trajectory for the vehicle is determined in view of the updated free-space area. Thereby, the candidate trajectories that are generated by the process proposed herein define a speed for the vehicle when traversing the free-space area that is deemed to be safe or below some predefined risk level.

### Definitions

In the present context, a Driving Automation System (DAS) refers to a complex combination of hardware and software components designed to control and operate a vehicle without direct human intervention. DAS technology aims to automate various aspects of driving, such as steering, acceleration, deceleration, and monitoring of the surrounding environment. The primary goal of a DAS is to enhance safety, efficiency, and convenience in transportation. A DAS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of a DAS can vary widely, from systems that provide limited assistance to those that can handle complex driving tasks independently in specific conditions.

Advanced Driver Assistance Systems (ADAS) are technologies that assist drivers in the driving process, though they do not offer full autonomy with respect to the driving task. ADAS features often serve as building blocks for DAS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an AD solution aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "DAS" in used herein as an umbrella term encompassing both ADAS and AD. A DAS function or DAS feature may in the present context be understood as a specific function or feature of the entire DAS stack, such as e.g., a Highway Pilot feature, a Traffic-Jam pilot feature, a path planning feature, and so forth.

Free-space area estimation commonly refers to the process of detecting and determining the navigable, obstacle-free region around a vehicle in real-time. This estimation is important for safe navigation and path or trajectory planning, allowing the vehicle to identify where it can drive without colliding with obstacles or other vehicles. It involves collecting data from sensors such as cameras, LiDAR, radar, or ultrasonic sensors, and processing this data using perception algorithms to detect objects and distinguish between obstacles and drivable areas. One may create a representation of the environment, often in the form of a grid map, polygon, or point cloud, marking free and occupied regions. The free-space area is continuously updated as the vehicle moves and as the environment changes, such as the appearance of dynamic obstacles like pedestrians. This information may then be provided as input to path-planning or trajectory-planning algorithms, enabling the vehicle to make real-time decisions for safe and efficient navigation.

Moreover, the estimated free-space area may be in the form of a merger of multiple free-space areas, one free-space area for each object class. For example, one may estimate one free-space area in view of pedestrians, one free-space area in view of vehicles, one free-space area in view of cyclists, and so forth. Each of these individual class-specific free-space areas may then be combined to form a general free-space area estimation.

The "surrounding environment" of the vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

In the present context, a "sensor" or "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings.

Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The term "object class" refers to a predefined category or type of object that a perception function is designed to recognize and classify within its environment. These classes are used to group detected objects based on their physical characteristics, behaviour, or relevance to driving tasks. Common object classes include vehicles, pedestrians, cyclists, traffic signs, animals, and road infrastructure elements (e.g., barriers or lanes). By assigning detected objects to specific classes, the perception function enables the DAS to understand the environment and make context-aware decisions, such as adjusting speed for pedestrians, maintaining distance from other vehicles, or responding to traffic signals.

The term "edge property class" refers to a predefined category or type that the system is configured to assign to a segment of an edge of a free-space area in accordance with some embodiments. The edge property class are in turn defined by the corresponding object classes of the objects that define the outer edge of the free-space area. For example, if a free-space area is limited in a specific direction by an object classified as a "vehicle", then that segment of the edge of the free-space area (that is limited by the vehicle) is assigned the edge property class "vehicle".

The term "candidate path" refers to a potential route or course that the vehicle could follow within its environment. It is typically a geometric representation, such as a curve or line, within the free-space area that satisfies certain constraints like staying within the lane, avoiding obstacles, and complying with road rules. Multiple candidate paths are often generated and evaluated to find the most suitable one for the vehicle's intended motion.

The term "candidate trajectory" refers to a time-parameterized version of a candidate path, defining not only the spatial route but also the vehicle's speed over time along that path. Accordingly, a candidate trajectory may be understood as a candidate path including a defined speed for the vehicle over time along that candidate path. A candidate trajectory incorporates dynamic constraints such as vehicle kinematics, dynamics, and environmental changes (e.g., moving obstacles) to ensure safe and feasible motion. The candidate path may also define the vehicle's acceleration and orientation along a candidate path.

The term "actuation capability" refers to the system's ability to control the physical mechanisms of the vehicle to execute desired driving actions. This includes controlling the throttle (to regulate speed), braking (to slow down or stop), and steering (to change direction), as well as other components like gear shifting or signalling, depending on the vehicle's design. Actuation capability ensures that a planned path or trajectory generated by the DAS can be accurately and safely followed by translating high-level decisions into precise, real-world vehicle movements. It must account for the vehicle's dynamics, mechanical limitations, and responsiveness to commands. In some embodiments, the actuation capability defines an acceleration capability, steering capability, and/or a braking capability of the vehicle.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### Embodiments

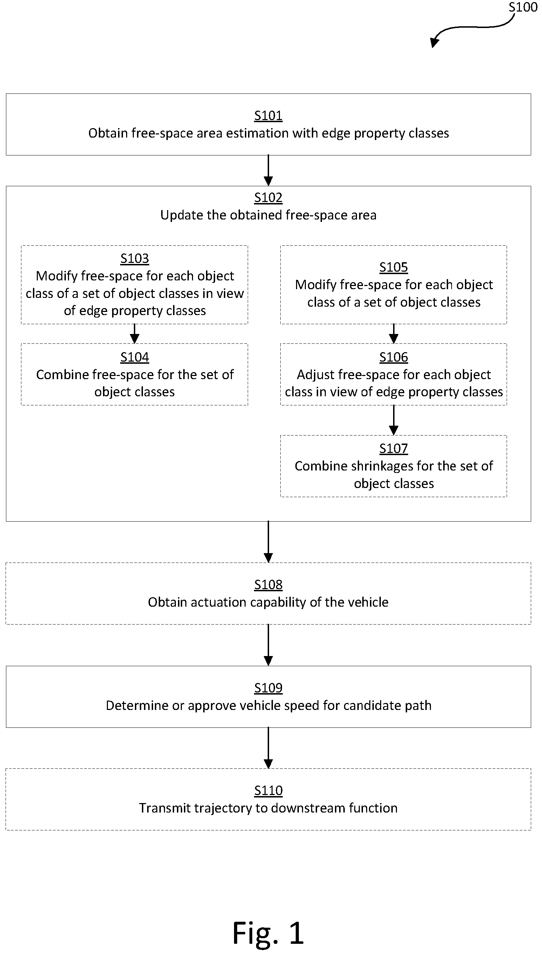

Fig. 1 is a schematic flowchart representation of a method for providing/determining trajectories for execution by a vehicle. The method S100 is preferably a computer-implemented method S100, performed by a processing system of the DAS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101 a free-space area in the surrounding environment of the vehicle that is formed based on sensor data output from one or more vehicle-mounted sensors. Moreover, the obtained S101 free-space area is defined by an edge having one or more edge property classes that are defined by corresponding object classes of objects that define segments of the edge of the obtained free-space area. In some embodiments, a free-space area may be received from a perception system of the vehicle, and the method S100 may comprise assigning edge property classes to the received free-space area based on detected and classified object in the surrounding environment of the vehicle. Alternatively, the free-space area that is received from the perception system may comprise the assigned edge property classes.

Further, the method S100 comprises updating S102 the obtained S101 free-space area by modifying a size of the obtained free-space area based on the one or more edge property classes. The modification of the size of the obtained S101 free-space area may involve shrinking and/or expanding/growing the free-space area. In the present context, shrinking refers to a reduction of the size of the free-space area by for example moving an edge of the free-space area inwards towards a centre portion of the free-space area, while expanding/growing refers to an increase of the size of the free-space area by for example moving an edge of the free-space area outwards away from a centre portion of the free-space area.

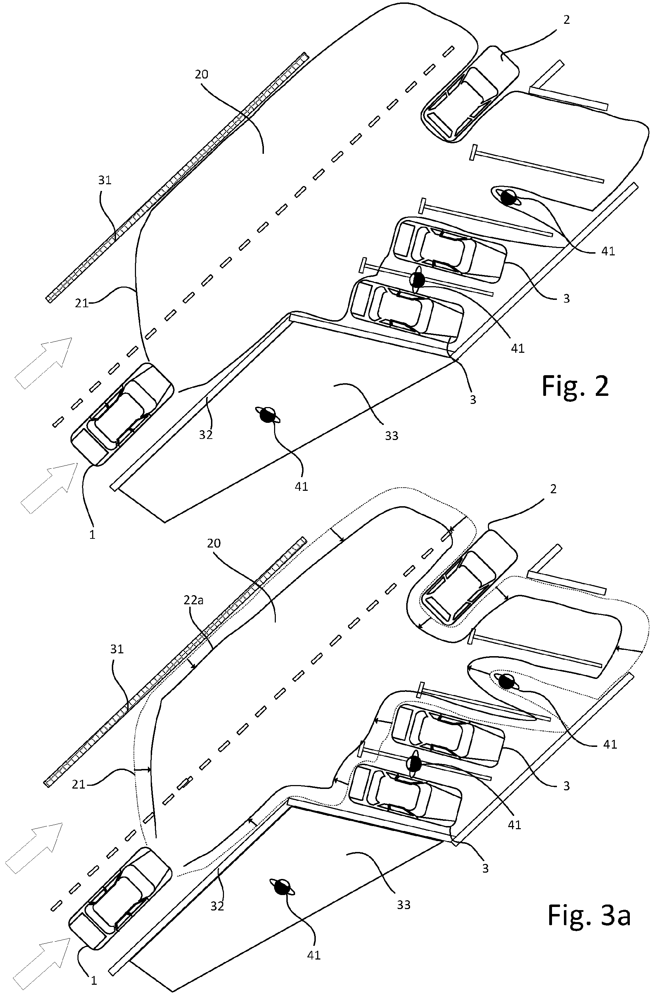

The updating S102 of the obtained free-space area by modifying its size will now be further elaborated upon in reference to Figs. 2, 3a, 3b, 4a, 4b, and 5.

Fig. 2 is a schematic illustration of a free-space area 20 in a surrounding environment of the vehicle 1. In the depicted scenario, the vehicle 1 (may also be referred to as ego-vehicle 1) is traveling on a two-lane road, where the two lanes are associated with the same traveling direction as indicated by the bolded arrows. The vehicle 1 is preceded by a lead vehicle 2, and is approaching a set of parking spaces on the right side of the vehicle, where the two closest parking spaces have two parked vehicles 3. The road is limited to the right side of the vehicle by a curb 32 acting as a divider between the road and pavement/sidewalk 33. Three pedestrians 41 are located in the surrounding environment. One pedestrian is on the pavement 33 and the other two pedestrians are in the set of parking spaces. The road is limited on the left side by a barrier or wall 31. The free-space area 20 has an edge 21 defining an outer limit of the free-space area.

The modification of the obtained S101 free-space area 20 may be performed on a per object class basis. In more detail, one may perform a first modification of the obtained S101 for a first object class of a set of predefined object classes, then perform a second modification of the obtained S101 for a second object class of the set of predefined object classes, and so forth until all object classes within the set of predefined object classes have been treated. Then, one may combine the various modified free-space areas of each object class of the set of predefined object classes into one final free-space area that forms the updated S102 free-space area. The combining of the multiple modified free-space areas may be performed so that the combined free-space area is an intersection (n) of the multiple modified free-space areas.

The term "intersection" refers to the mathematical operation in set theory, where the intersection of two sets A and B, denoted An B is the set containing all elements of A that also belong to B. For example, if set A={1, 2, 3} and set B={2, 3, 4}, then the intersection of A and B is {2, 3}. In the present context this may be understood as the intersection of a first modified free-space area and a second modified free-space area includes all area segments of the first modified free-space area that also belong to the second free-space area.

In some embodiments, the updating S102 of the obtained free-space area 20 is performed as a three-step process, which is schematically illustrated in Figs. 3a, 3b, 4a, 4b, and 5. In more detail, the updating S102 of the obtained S101 free-space area may comprise, for each object class of a set of predefined object classes, modifying S105 the size of the obtained free-space area based on a motion model for that object class, and adjusting S106 the modified S105 free-space area in dependence of the one or more edge property classes. Then, the modified free-space areas for the set of predefined object classes may be combined S107 to form the updated free-space area.

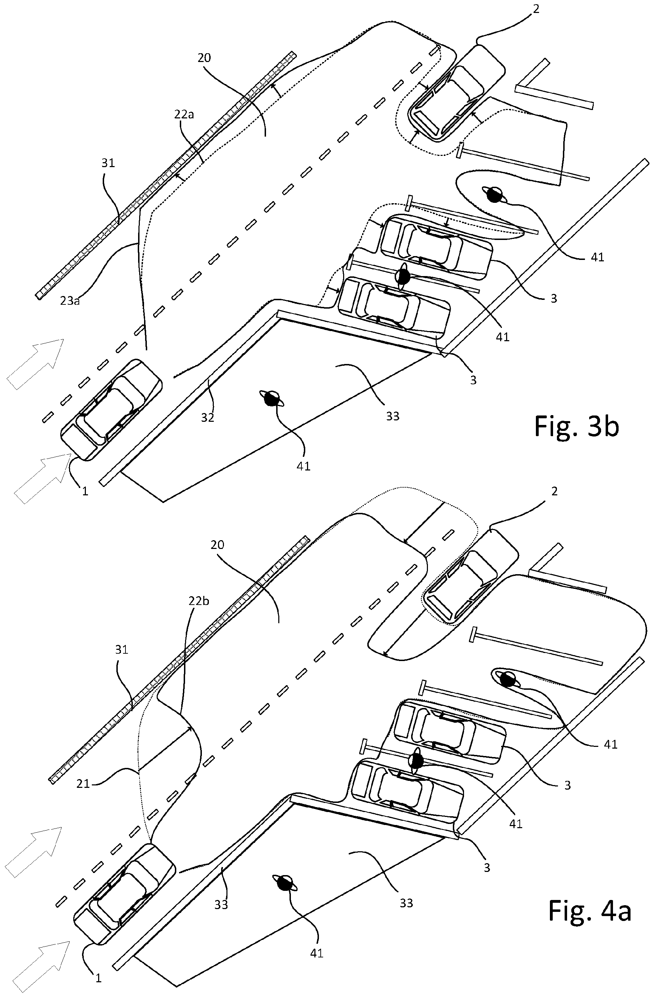

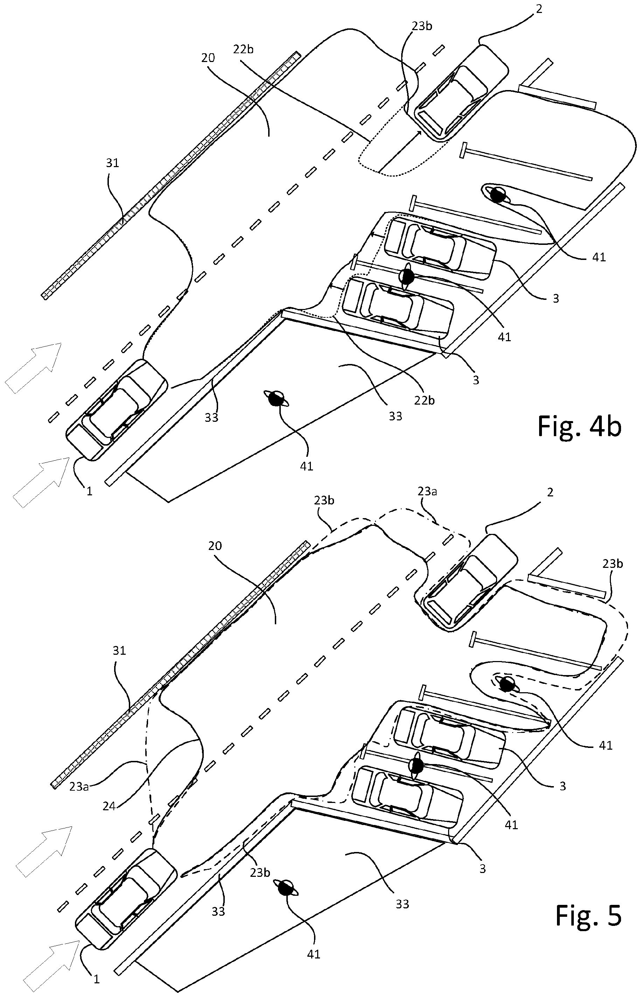

In the examples depicted in Fig. 3a, 3b, 4a, 4b, and 5 the set of predefined object classes is "pedestrian" and "vehicle". In particular, Figs. 3a and 3b relate to the modification S105 and adjustment S106 in view of pedestrians and Figs. 4a and 4b relate to the modification S105 and adjustment S106 in view of vehicles.

In some embodiments, the set of predefined object classes are independent of any classified objects in the surrounding environment of the vehicle 1. Thus, the set of predefined object classes may be static and defined in "design-time" so that the free-space estimation process performed by the vehicle is configured to always account for a predetermined set of object classes, regardless of any currently detected and classified objects in the surrounding environment of the vehicle. Thereby, the free-space area estimation may be less dependent on the reliability of any object detection system of the DAS. Moreover, the use of a set of predefined object classes that are independent of any classified objects in the surrounding environment of the vehicle 1, enables the resulting free-space estimation to account for undetected, but yet present objects (e.g., obscured objects).

In some embodiments, the set of predefined object classes comprises one or more of vulnerable road user (VRU), vehicle, or wildlife. The VRU object class may comprise sub-classes such as pedestrian, cyclist, and motorcyclist that may be included independently in the set of predefined object classes. Similar reasoning may be considered for the object class "wildlife" (that may include moose, bear, deer, badger, fox, etc.). Moreover, the set of predefined object classes may comprise static unknown object, albeit with a trivial motion/behaviour model. In other words, the set of predefined object classes may comprise pedestrian, cyclist, motorcyclist, vehicle, moose, bear, deer, badger, fox, and/or static unknown object.

Turning now to Fig. 3a, the size of the free-space area 20 has been modified by shrinking the size of the free-space area 20 based on a motion model for an object class in the form of pedestrians. The obtained S101 free-space area 20 is indicated by the dotted lines 21 showing the original extension of the free-space area 20, while the modified S105 free-space area is indicated by the line 22a. As indicated by the arrows extending from the original free-space edge 21 to the modified free-space edge 22a, the modification S105 may comprise shrinking the obtained free-space area based on a motion model for a particular object class. In more detail, the motion model may be defined design-time and accordingly be a predefined motion model for pedestrians indicating a potential behaviour of pedestrians should they reside at the edge 21 of the obtained free-space area. In this modification S105 of the obtained S101 free-space area, the edge property classes are (temporarily) ignored. In other words, the "motion model" for an object class as used herein does not account for edge property classes.

Thus, given the motion model of an object class, in this case pedestrians, a uniform shrinkage of the obtained S101 free-space area 20 is applied to account for a potential risk of a pedestrian entering the obtained free-space 20 from any point along the edge 21 of the obtained free-space 20. The motion model may be a predefined model that is based on collected fleet data (i.e., real-world sensor measurements performed by vehicles in traffic) and/or information from literature (such as "Pedestrian walking speed at un-signalized midblock crosswalk and its impact on urban street segment performance" by Forde and Daniel or the study "The Pace of Life in 31 Countries" by Levine and Norenzayan).

Then, given the edge property classes of the obtained S101 free-space area, an adjustment S106 to the modified free-space area (defined by edge 22a) is performed. In some embodiments, the adjustment S106 of the modified S105 free-space area is done on a "per segment level". In other words, the adjustment S106 comprises for each segment of the edge of the modified S105 free-space area, adjusting the modified S105 free-space area based on a behaviour model of that object for the edge property class of that segment. Similar to the motion model, the behaviour model may be a predefined model that is based on collected fleet data (i.e., real-world sensor measurements performed by vehicles in traffic) and/or information from literature.

The adjustment S106 is schematically illustrated in Fig. 3b and defined by the edge 23a. For example, the left edge 22a (in reference to the vehicle's 1 traveling direction) of the modified free-space area is limited by a barrier or wall 31. Thus, the edge property class for that segment of the edge is "barrier" or "wall". Here it can be assumed that it is unlikely that a pedestrian would appear and cross that barrier or wall, or at least not at any high speed. This may for example be given by the behaviour model of "pedestrians" for the edge property class "barrier" or "wall". Therefore, the previously applied shrinkage S105 at that segment of the edge (proximate to the barrier 31) is considered to be unwarranted and restored to the original edge of the obtained free-space area. Similarly, the segment of the edge of the free-space area 20 that is defined by the lead vehicle 2 is assigned an edge property class of "lead vehicle" or "moving vehicle". As before, it can be assumed that a pedestrian would appear at that segment of the edge as it would require the pedestrian to exit a moving vehicle, which is deemed to be highly unlikely. Thus, the previously applied shrinkage S105 at that segment of the edge (proximate to the lead vehicle) is considered to be unwarranted and restored to the original edge of the obtained free-space area. Similar reasoning is applied for the parked vehicles 3, and the risk of pedestrians exiting the trunk or boot of the parked vehicles 3.

However, the shrinkage S105 applied to other parts of the free-space area 20 is maintained. For example, the segment of the edge proximate to the curb 32 is assigned an edge property class of "curb". Here, it is not extremely unlikely that a pedestrian may step onto the road from the curb 32, and therefore the previously applied modification (shrinkage) S105 to that segment of the edge (proximate to the curb 32) is maintained.

Turning now to Fig. 4a, the size of the free-space area 20 has been modified S105 by shrinking the size of the obtained S101 free-space area 20 based on a motion model for an object class in the form of vehicles. The obtained S101 free-space area 20 is indicated by the dotted lines 21 showing the original extension of the free-space area 20, while the modified S105 free-space area is indicated by the line 22b.

In the depicted example, account has not been taken for vehicles that may appear "from the side", but the object class "vehicle" in the present example is limited to vehicles that may travel on the same road in the same traveling direction as the ego-vehicle 1. This is mainly performed to improve readability and facilitate understanding by reducing the complexity. Thus, in the depicted example, the modification S105 for the object class "vehicle" only encompasses shrinkage of the obtained S101 free-space area for potential vehicles that may appear on the road and travel in the same direction as the ego-vehicle, as indicated by the arrows extending from the original free-space edge 21 to the modified free-space edge 22b.

Thus, given the motion model of an object class, in this case vehicles (in this example, vehicles traveling on the road in the same direction as the ego-vehicle 1), a longitudinal shrinkage of the obtained S101 free-space area is applied to account for a potential risk of a vehicle entering the obtained free-space 20 from any point along the longitudinal edge of the obtained free-space 20. As mentioned before, the motion model may be a predefined model that is based on collected fleet data (i.e., real-world sensor measurements performed by vehicles in traffic) and/or information from literature (such as the Naturalistic Driving Studies (NDSs) performed by the Strategic Highway Research Program).

Then, given the edge property classes of the obtained S101 free-space area, an adjustment S106 to the modified free-space area (defined by edge 22b) is performed. As before, the adjustment S106 of the modified S105 free-space area is done on a "per segment level". In other words, the adjustment S106 comprises for each segment of the edge of the modified S105 free-space area, adjusting the modified S105 free-space area based on a behaviour model of that object for the edge property class of that segment.

This adjustment is schematically illustrated in Fig. 4b and defined by the edge 23b. For example, the segment of the edge 22b of the modified free-space area is limited by a lead vehicle 2. Thus, the edge property class for that segment of the edge is "lead vehicle". Here it can be assumed that it is unlikely that a vehicle would appear and start traveling towards the ego-vehicle 1 or that the lead vehicle 2 would start traveling in reverse. Therefore, the previously applied shrinkage S105 at the segment of the edge (proximate to the lead vehicle 2) is considered to be unwarranted and restored (adjusted) to the original edge of the free-space area. Moreover, for the segment of the edge 22b proximate to the parked vehicles 3 that has been labelled with an edge property class of "parked vehicle", an adjustment S106 is made so to shrink the modified free-space area as the edge property class defines that the parked vehicles 3 could start moving (albeit slowly - indicated by the smaller shrinkage as compared to the shrinkages in Fig. 4a along the road).

However, the shrinkage S105 applied to other parts of the free-space area 20 is maintained. For example, the segments of the edge along the longitudinal edge of the lane adjacent to the ego-lane may be assigned an "unknown" or "unclassified" object class as the edges of the free-space area are not limited by any classified object as those particular segments. Here, it may be not be possible to exclude the possibility (or at least not to a sufficient degree) that a vehicle (traveling on the road in the same direction as the ego-vehicle 1) may appear, and therefore the previously applied modification (shrinkage) S105 to those segments of the edge are maintained.

Next, the adjusted S106 free-space areas for the set of predefined object classes in order to form the updated free-space area are combined S107 to form the updated free-space area. In other words, the free-space areas defined by edge 23a in Fig. 3b and edge 23b in Fig. 4b are combined to form the updated free-space area, as indicated by the edge 24 in Fig. 5. In more detail, the combination S107 of the adjusted S106 free-space areas may comprise forming the updated free-space area as the intersection of the adjusted S106 free-space areas for the set of predefined object classes.

In the foregoing, the updating S102 of the obtained free-space area 20 was described as a three-step process (modifying and adjusting free-space area per object class and then combining the adjusted free-space areas for all object classes). However, in some embodiments, the previously described modification and adjustment may be performed in one modification S103 process on a per object class level. In more detail, one may modify S103 the size of the obtained S101 free-space area based on a behaviour model for that object class given the one or more edge property classes. In other words, one accounts for the edge property class already in the modification S103 of the obtained S101 free-space area. Similar as before, once the obtained S101 free-space area has been modified S103 for each object class, the modified S103 free-space areas for the set of predefined object classes are combined S104 to form the updated free-space area. Here, the combination S104 of the modified S103 free-space areas may comprise forming the updated free-space area as the intersection of the modified S103 free-space areas for the set of predefined object classes.

It will also be understood that, the terms "motion model" and "behaviour model", are only used to distinguish one model from another. For example, a motion model could be termed a behaviour model, and, similarly, a behaviour model could be termed a motion model, without departing from the scope of the embodiments. The two different terms are mainly used to improve readability and separate the two models, but both models have similar purposes, namely to parametrize or model a behaviour of an object class in a traffic scenario. However, in the present context, the motion model for an object class does not take an edge property class into account for determining a shrinkage or expansion of a free-space area, while the behaviour model does. In other words, the motion model for an object class is independent of any edge property classes, while the behaviour model for an object class is dependent on the edge property classes.

Moving on, the method S100 further comprises determining or approving S109 a vehicle speed for a candidate path within the updated free-space area to be executed by the vehicle. Here, the vehicle speed is determined in dependence of the modification of the size of the obtained S101 free-space area. Accordingly, the method S100 may comprise determining a vehicle speed for a given candidate path within the updated S102 free-space area, or approving a suggested vehicle speed for a candidate path within the updated S102 free-space area. In other words, one may either receive one or more candidate paths to be executed by the vehicle 1, and then determine a vehicle speed in dependence of the modification of the size of the obtained S101 free-space area, in order to output a candidate trajectory for the vehicle. Or one may receive a set of candidate trajectories that may be defined by the same candidate path, whereupon one may approve one of the candidate trajectories (i.e., candidate path that also includes a vehicle speed) in dependence of the modification of the size of the obtained S101 free-space area. In some embodiments, the vehicle speed is determined or approved S109 so to fulfil a predefined risk level for the vehicle 1 in view of the updated free-space area.

Further, in some embodiments, the method S100 comprises transmitting S110 the determined or approved S109 vehicle speed for the candidate path to one or more downstream functions of a Driving Automation System (DAS) of the vehicle. Here, the one or more downstream functions are configured to cause the vehicle to execute the candidate path at the determined or approved vehicle speed. A downstream function of the DAS may for example be a decision and control module configured to output control signals to one or more actuators of the vehicle so to control a movement of the vehicle at least partly based on the determined or approved S109 vehicle speed for the candidate path. Moreover, the method S100 may comprise controlling the vehicle to execute the candidate path at the determined or approved S109 vehicle speed.

Further, in some embodiments, the method S100 further comprises obtaining an actuation capability of the vehicle, where the actuation capability defines an acceleration capability, steering capability, and/or a braking capability of the vehicle. Moreover, the vehicle speed is further determined or approved S109 for the candidate path based on the obtained actuation capability. In other words, the method S100 also accounts for the vehicle capabilities for setting the speed for the candidate path in order to ensure that the vehicle is capable of executing the resulting candidate trajectory.

Executable instructions for performing these functions are, optionally, included in a non-transitory computer-readable storage medium or other computer program product configured for execution by one or more processors.

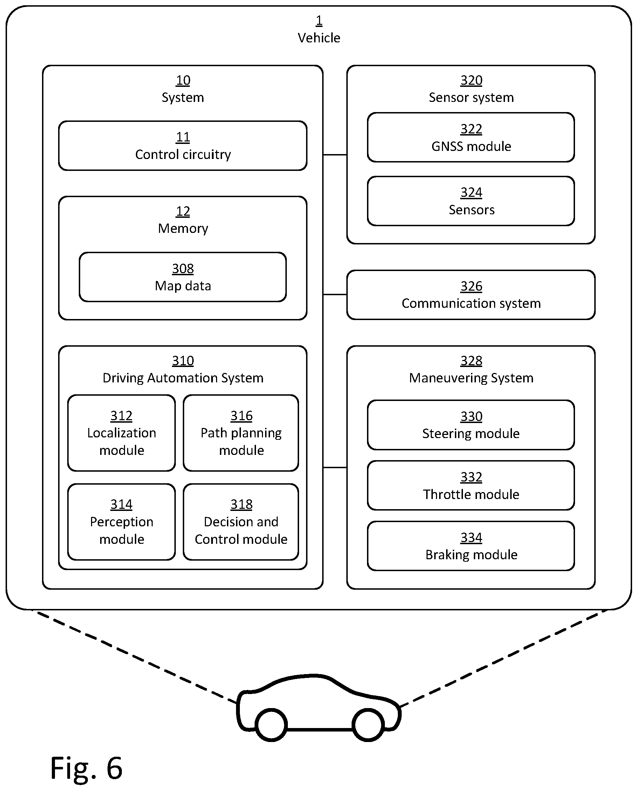

Fig. 6 is a schematic illustration of an DAS-equipped vehicle 1 comprising such a system 10 for providing trajectories for execution by a vehicle in accordance with some embodiments. The system 10 comprises control circuitry (e.g. one or more processors) 11 configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. As used herein, a "vehicle" is any form of motorized transport. For example, the vehicle 1 may be any road vehicle such as a car (as illustrated herein), a motorcycle, a (cargo) truck, a bus, etc.

The control circuitry 11 may physically comprise one single circuitry device. Alternatively, the control circuitry 11 may be distributed over several circuitry devices. As an example, the system 10 may share its control circuitry 11 with other parts of the vehicle 1 (e.g. the ADS 310). Moreover, the system 10 may form a part of the DAS 310, i.e. the system 10 may be implemented as a module or feature of the DAS. The control circuitry 11 may comprise one or more processors, such as a central processing unit (CPU), a graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In more detail, the control circuitry 11 is configured to obtain a free-space area in the surrounding environment of the vehicle 1 based on sensor data output from one or more vehicle-mounted sensors 324. The obtained free-space area is defined by an edge having one or more edge property classes that are defined by corresponding object classes of objects that define segments of the edge of the obtained free-space area. Further, the control circuitry 11 is configured to update the obtained free-space area by modifying a size of the obtained free-space area based on the one or more edge property classes, and determine or approve a vehicle speed for a candidate path within the updated free-space area to be executed by the vehicle. Here, the vehicle speed is determined in dependence of the determined modification of the size of obtained free-space area.

Moreover, the control circuitry 11 may be configured to transmit the determined or approved vehicle speed for the candidate path to one or more downstream functions of a Driving Automation System of the vehicle. The one or more downstream functions are configured to cause the vehicle to execute the candidate path at the determined or approved vehicle speed.

The control circuitry 11 may be configured to update the obtained free-space area by, for each of a set of predefined object classes, modifying the size of the obtained free-space area based on a behaviour model for that object class given the one or more edge property classes, and combining the modified free-space areas for the set of predefined object classes in order to form the updated free-space area.

Furthermore, the control circuitry 11 may be configured to update the obtained free-space area by, for each of a set of predefined object classes, modifying the size the obtained free-space area based on a motion model for that object class, and adjusting the modified free-space area in dependence of the one or more edge property classes. Further, the control may be configured to update the obtained free-space area by combining the adjusted free-space areas for the set of predefined object classes in order to form the updated free-space area.

Moreover, the control circuitry 11 may be configured to adjust the modified free-space area by, for each segment of the edge of the modified free-space area, adjusting the modified free-space area based on a behaviour model of that object for the edge property class of that segment.

In the illustrated example, the memory 12 further stores map data 308. The map data 308 may for instance be used by the DAS 310 of the vehicle 1 in order to perform autonomous functions of the vehicle 1. The map data 308 may comprise high-definition (HD) map data. It is contemplated that the memory 12, even though illustrated as a separate element from the DAS 310, may be provided as an integral element of the DAS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the DAS 310 or any other system of the vehicle 1. In other words, according to an exemplary embodiment, any distributed or local control circuitry device may be utilized in the realization of the present inventive concept. The DAS 310 is configured carry out the functions and operations of the autonomous or semi-autonomous functions of the vehicle 1. The DAS 310 can comprise a number of modules, where each module is tasked with different functions of the DAS 310.

The vehicle 1 comprises a number of elements which can be commonly found in autonomous or semi-autonomous vehicles. It will be understood that the vehicle 1 can have any combination of the various elements shown in Fig. 6. Moreover, the vehicle 1 may comprise further elements than those shown in Fig. 6. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 6 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the DAS 310 of the vehicle, to receive instructions on how the various modules of the maneuvering system 328 should act. Thus, the DAS 310 can control the maneuvering of the vehicle 1, for example via the decision and control module 318.

The DAS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The DAS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The DAS may further comprise a path planning module 316 configured to output one or more candidate paths for execution by the vehicle. The path planning module 316 may receive an input from the perception module 314 in order to generate the candidate paths, and it may output the generated candidate paths to the decision and control module 318 for execution. The path planning module 316 may alternatively be in the form of a trajectory planning module depending on specific realizations and implementations.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining steps, updating steps, determining steps, approving steps, modifying steps, adjusting steps, and transmitting steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for providing trajectories for execution by a vehicle, the computer-implemented method comprising:
obtaining (S101) a free-space area in a surrounding environment of the vehicle that is formed based on sensor data output from one or more vehicle-mounted sensors, wherein the obtained free-space area is defined by an edge having one or more edge property classes that are defined by corresponding object classes of objects that define segments of the edge of the obtained free-space area;
updating (S102) the obtained free-space area by modifying a size of the obtained free-space area based on the one or more edge property classes; and
determining or approving (S109) a vehicle speed for a candidate path within the updated free-space area to be executed by the vehicle, wherein the vehicle speed is determined in dependence of the determined modification of the size of obtained free-space area.

2. The computer-implemented method (S100) according to claim 1, further comprising:
transmitting (S110) the determined or approved vehicle speed for the candidate path to one or more downstream functions of a Driving Automation System of the vehicle, the one or more downstream functions being configured to cause the vehicle to execute the candidate path at the determined or approved vehicle speed.

3. The computer-implemented method (S100) according to claim 1 or 2, wherein updating (S102) the obtained free-space area comprises:
for each of a set of predefined object classes:
modifying (S103) the size of the obtained free-space area based on a behaviour model for that object class given the one or more edge property classes; and
combining (S104) the modified free-space areas for the set of predefined object classes in order to form the updated free-space area.

4. The computer-implemented method (S100) according to claim 1 or 2, wherein updating (S102) the obtained free-space area comprises:
for each of a set of predefined object classes:
modifying (S105) the size of the obtained free-space area based on a motion model for that object class, and adjusting (S106) the modified free-space area in dependence of the one or more edge property classes;
combining (S107) the adjusted free-space areas for the set of predefined object classes in order to form the updated free-space area.

5. The computer-implemented method (S100) according to claim 4, wherein the adjusting (S105) the modified free-space area comprises:
for each segment of the edge of the modified free-space area:
adjusting the modified free-space area based on a behaviour model of that object for the edge property class of that segment.

6. The computer-implemented method (S100) according to any one of claims 3-5, wherein the set of predefined object classes are independent of any classified objects in the surrounding environment of the vehicle.

7. The computer-implemented method (S100) according to any one of claims 3-6, wherein the set of predefined object classes comprises one or more of vulnerable road user, vehicle, or wildlife.

8. The computer-implemented method (S100) according to any one of claims 1-7, wherein the free-space area represents areas that are free from objects in the surrounding environment of the vehicle.

9. The computer-implemented method (S100) according to any one of claims 1-8, further comprising:
obtaining (S108) an actuation capability of the vehicle, wherein the actuation capability defines an acceleration capability, steering capability, and/or a braking capability of the vehicle;
wherein the vehicle speed is further determined or approved (S109) based on the obtained actuation capability.

10. The computer-implemented method according to any one of claims 1-9, wherein the vehicle speed is further determined or approved (S109) so to fulfil a predefined risk level for the vehicle in view of the updated free-space area.

11. A computer program product comprising instructions which, when the program is executed by a computing device, causes the computing device to carry out the method (S100) according to any one of claims 1-10.

12. A computer-readable storage medium comprising instructions which, when executed by a computing device, causes the computing device to carry out the method (S100) according to any one of claims 1-10.

13. A system (10) for providing trajectories for execution by a vehicle (1), the system comprising control circuitry (11) configured to:
obtain a free-space area (20) in the surrounding environment of the vehicle that is formed based on sensor data output from one or more vehicle-mounted sensors (324), wherein the obtained free-space area (20) is defined by an edge (21) having one or more edge property classes that are defined by corresponding object classes of objects that define segments of the edge of the obtained free-space area;
update the obtained free-space area by modifying a size of the obtained free-space area based on the one or more edge property classes; and
determine or approve a vehicle speed for a candidate path within the updated free-space area to be executed by the vehicle (1), wherein the vehicle speed is determined in dependence of the determined modification of the size of obtained free-space area.

14. The system (10) according to claim 13, wherein the control circuitry (11) is further configured to:
transmit the determined or approved vehicle speed for the candidate path to one or more downstream functions of a Driving Automation System (310) of the vehicle, the one or more downstream functions being configured to cause the vehicle to execute the candidate path at the determined or approved vehicle speed.

15. A vehicle (1) comprising a system (10) according to claim 13 or 14.
